(19) Europäisches Patentamt
European Patent Office
Office européen des brevets

(11) Publication number: **0 455 137 A2**

(12) **EUROPEAN PATENT APPLICATION**

(21) Application number: **91106688.4**

(51) Int. Cl.[5]: **C08L 83/12**, C08L 83/06

(22) Date of filing: **25.04.91**

(30) Priority: **26.04.90 JP 111358/90**

(43) Date of publication of application:
**06.11.91 Bulletin 91/45**

(84) Designated Contracting States:
**BE DE FR GB**

(71) Applicant: **DOW CORNING TORAY SILICONE COMPANY, LIMITED**
**Mitsui Building No. 6,**
**2-3-16,Nihonbashi-Muromachi**
**Chuo-ku Tokyo 103(JP)**

(72) Inventor: **Mikami, Ryuzo**
**6, 1-chome, Yushudai Nishi**
**Ichihara-shi, Chiba Prefecture(JP)**
Inventor: **Nakamura, Akito**
**6, 1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

(54) **Charge-dissipating silicone rubber compositions.**

(57) Long-term charge dissipating ability is imparted to elastomers prepared from organosiloxane compositions curable by a platinum-catalyzed hydrosilation reaction by utilizing as the alkenyl-substituted organopolysiloxane one ore more organopolysiloxanes containing at least two alkenyl radicals and at least one pendant polyoxyalkylene group that is bonded to silicon by means of an alkylene radical.

EP 0 455 137 A2

This invention relates to organosiloxane compositions which cure to yield silicone rubber moldings exhibiting an excellent ability to dissipate electrical charges, among other desirable properties. Elastomers prepared using some of the present compositions exhibit improved ability to be painted relative to elastomers prepared from similar prior art organosiloxane compositions.

Silicone rubbers are used in a variety of applications due to their excellent electrical insulation, heat resistance, cold resistance, and flexibility. These properties are due to the unique structure of the organopolysiloxane molecule.

A shortcoming of many silicone rubbers is their tendency to accumulate electrical charges relatively easily. This property causes a number of problems when these rubbers are used in electrical and electronic devices.

Additives for organosiloxane compositions that cure by a platinum-catalyzed hydrosilylation reaction that inhibit accumulation of electrical charges in the cured elastomer are known. These additives are typically conductive or charge-dissipating materials such as carbon black, silver and copper.

Many of these prior art additives have disadvantages. Some increase the viscosity of a curable organosiloxane composition, thereby reducing its moldability. In addition, the additives may alter the properties of the curable composition or impart a color or other undesirable property to the cured silicone rubber molding, thereby limiting the end-use application of the molding.

The objective of the present invention is to provide curable organosiloxane compositions which cure to yield moldings and other products exhibiting an excellent ability to dissipate electrical charges, where this ability does not decrease with the passage of time.

The present inventors discovered that the objective of the present invention can be achieved by the presence as the main reactive ingredient of a hydrosilylation reaction-curing organosiloxane composition of an organopolysiloxane containing at least two alkenyl radicals and at least one pendant polyoxyalkylene group that is bonded to silicon through an alkylene radical. These organopolysiloxanes constitute the entire portion of the alkenyl-substituted diorganopolysiloxanes present in the curable composition.

This invention provides improved organosiloxane compositions comprising

(A) an organopolysiloxane having at least two silicon-bonded alkenyl groups in each molecule;

(B) an amount of an organohydrogenpolysiloxane containing at least 3 silicon-bonded hydrogen atoms in each molecule sufficient to provide a molar ratio of silicon-bonded hydrogen atoms to alkenyl radicals in said composition of from 0.5 : 1 to 20 : 1; and

(C) an amount of a platinum-containing catalyst sufficient to promote curing of said composition.

The improvement consists essentially of the presence in said composition as said organopolysiloxane of at least one organopolysiloxane containing at least two silicon-bonded alkenyl radicals and at least 0.2 weight percent of pendant silicon-bonded polyoxyalkylene groups per molecule, where said polyoxyalkylene groups are represented by the formula $R^1(OR^2)_nOR^3$-, $R^1$ is an alkyl radical, $R^2$ and $R^3$ are alkylene radicals, the value of $\underline{n}$ is from 2 to 52, inclusive and where substantially all of the remaining silicon-bonded organic groups present in said organopolysiloxane are hydrocarbon radicals or halogenated hydrocarbon radicals;

The organopolysiloxane (Ingredient A) is the main reactive ingredient of the present compositions and is cured by means of a platinum-catalyzed hydrosilylation reaction with an organohydrogen-polysiloxane (ingredient B) utilizing the catalytic activity of a platinum-containing hydrosilylation catalyst (ingredient C).

Ingredient A is an organopolysiloxane containing at least two silicon-bonded alkenyl radicals and at least 0.2 weight percent of pendant silicon-bonded polyoxyalkylene groups per molecule. The polyoxyalkylene group is represented by the formula $R^1(OR^2)_nOR^3$-, where $R^1$ is an alkyl radical, $R^2$ and $R^3$ are alkylene radicals, the value of $\underline{n}$ is from 2 to 52, inclusive and where substantially all of the remaining silicon-bonded organic groups are hydrocarbon radicals or halogenated hydrocarbon radicals

The silicon-bonded alkenyl radicals present in all of the organopolysiloxanes that can be present in ingredient A contain from 2 to about 10 carbon atoms and include but are not limited to vinyl, allyl, propenyl and hexenyl. While the alkenyl radicals may be present anywhere in the molecule, they are preferably present at the terminal positions.

The molecular structure of ingredient A can be linear or branched, a linear structure being preferred. The molecular weight of these organopolysiloxanes is not specifically restricted, and their consistency can range from a low-viscosity liquids to a very high-viscosity gum. To provide a rubbery elastic cured product, it is advantageous for the viscosity of ingredient A, measured at 25 degrees Centigrade, to be at least 100 centipoise.

Other than alkenyl radicals and polyoxyalkylene groups, the silicon-bonded organic groups present in the organopolysiloxanes that constitute ingredient A are hydrocarbon and halogenated hydrocarbon radicals that include but are not limited to alkyl radicals such as methyl, ethyl, and propyl, aryl radicals such as phenyl and perfluoroalkylethyl radicals such as 3,3,3-trifluoropropyl.

Ingredient A always includes at least one organopolysiloxane containing silicon-bonded polyoxyalkylene groups. These polyoxyalkylene groups are required for imparting to cured elastomers prepared using the present compositions excellent anti-static and charge dissipating properties, an excellent hydrophilicity, and an excellent ability to be coated with various types of paints.

In the preceding formula for the polyoxyalkylene group, $R^1$ represents an alkyl radical exemplified but not limited to methyl, ethyl, and n-propyl. $R^2$ preferably represents an alkylene radical containing from 1 to 4 carbon atoms that includes but is not limited to methylene, ethylene, propylene, and butylene. $R^3$ preferably represents an alkylene radical containing from 2 to 4 carbon atoms.

The subscript n represents the number of oxyalkylene units in the polyoxyalkylene group, and is typically from 2 to 52. The anti-static and charge-dissipating properties, hydrophilicity, and paintability of the silicone rubber product degrade at values of n less than 2. At the other end of the range for n, a decline in the curability of the present invention's silicone rubber composition is noted when n has a value greater than 52.

The concentration of polyoxyalkylene groups in ingredient A relative to the total number of silicon-bonded organic groups in the molecules of this ingredient is critical. When this relative concentration is below about 0.2 weight percent, the anti-static and charge-dissipating properties, hydrophilicity, and paintability of elastomers prepared using the present compositions deteriorates.

This concentration of polyoxyalkylene groups is preferably at least 1 weight%, and more preferably at least 3 weight%, based on the total weight of all the silicon-bonded organic groups in the organopolysiloxanes containing these groups.

The silicon-bonded organic groups other than polyoxyalkylene groups that can present in ingredient A are substituted or unsubstituted monovalent hydrocarbon radicals. The substituent is preferably halogen. The hydrocarbon radicals that can be present in ingredient A included but are not limited to alkyl radicals such as methyl, ethyl, propyl, n-butyl, sec-butyl and higher homologs containing up to about 10 carbon atoms, alkenyl radicals such as vinyl, allyl and butenyl, halogenated alkyl radicals such as chloromethyl, perfluoroalkylethyl radicals such as 3,3,3-trifluoropropyl, and aryl radicals such as phenyl, tolyl and xylyl. Preferably at least one of the hydrocarbon radicals on each of the silicon atoms of ingredient A is lower alkyl, most preferably methyl.

Combinations of two or more of the organopoly-siloxanes defined as ingredient A of the present compositions can be used.

Various methods are known for preparing ingredient A. A preferred method involves the following steps:

A dichlorosilane containing a polyoxyalkylene group as a substituent is prepared by an addition reaction between (1) methyldichlorosilane and (2) a polyoxyalkylene exhibiting a molecular weight of from 200 to 3,000 and containing an aliphatically unsaturated hydrocarbon radical at one molecular chain terminal and an aliphatically saturated hydrocarbon radical at the other molecular chain terminal. This reaction product is then condensed with a diorganopolysiloxane having a silanol group at both terminal positions to yield a diorganopolysiloxane containing the polyoxyalkylene group as a side chain and a hydroxyl group at both terminal positions.

As the final step a dialkylalkenylsiloxy group is introduced at each terminal position by reacting a dialkylalkenylchlorosilane with the hydroxyl groups at both terminal positions of this diorganopolysiloxane.

The equations for these reactions can be written as follows.

<u>(1) The addition reaction</u>

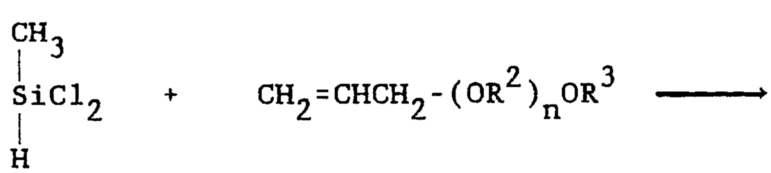

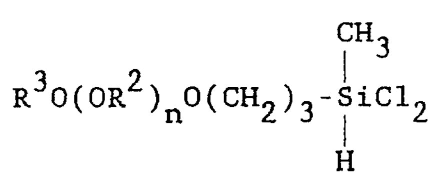

(I)

In the preceding equation, $R^3$ represents an alkyl radical such as methyl, ethyl, or propyl, and $R^2$ is an alkylene radical such as methylene, ethylene, or propylene.

(2) The condensation reaction

(I)

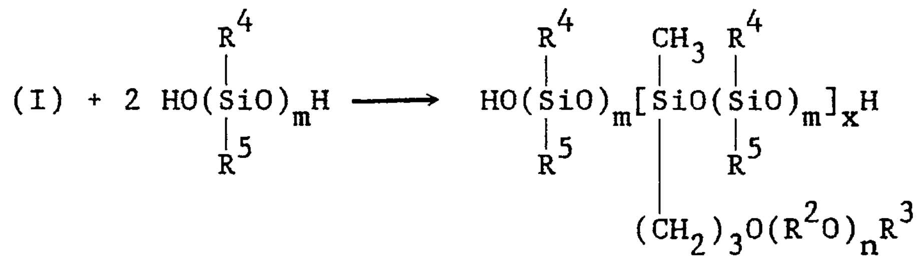

In the preceding equation $R^4$ and $R^5$ represent monovalent hydrocarbon radicals that include but are not limited to alkyl radicals such as methyl, ethyl and propyl; alkenyl radicals such as vinyl, allyl, propenyl, and hexenyl; and aryl radicals such as phenyl; m and x are integers having a value of at least 1.

(3) The chain termination reaction

(II)

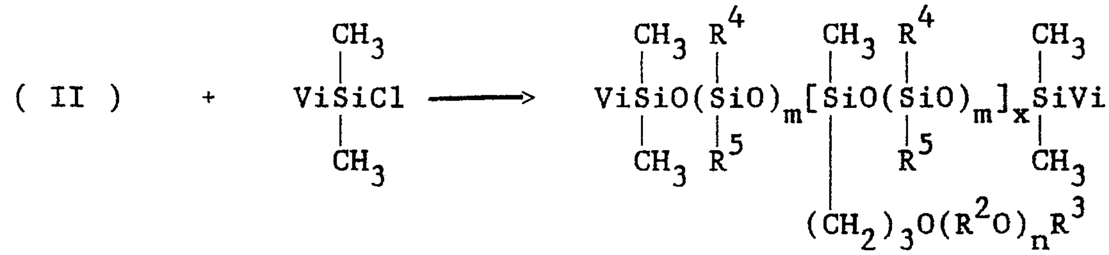

where Vi represents a vinyl radical.

The molecular weight of these organopolysiloxanes will generally be at least 1,000 but is preferably less than 1,000,000 because excessively high molecular weights are detrimental to the production of this ingredient.

The molecular weight of these organopolysiloxanes can be controlled by the choice of the molecular weight of the diorganopolysiloxane in the aforementioned condensation reaction (step 2) and also by the choice of the molar ratio of diorganopolysiloxane to dichlorosilane in this step. For example, when higher molecular weight diorganopolysiloxanes are required, this molar ratio should be around 1. Lower molar ratios should be used when a low molecular weight diorganopolysiloxane is required.

Another method for preparing organopolysiloxanes containing pendant polyoxyalkylene groups is by the polymerization to equilibrium under acid or alkali catalysis of an organopolysiloxane containing these silicon-bonded polyoxyalkylene groups and an organopolysiloxane containing silicon-bonded alkenyl radicals.

In contrast to the simple blending into the curable composition of a polyoxyalkylene or adduct thereof, the introduction of the polyoxyalkylene group into the matrix of cured elastomer by means of a hydrosilylation reaction involving the alkenyl radicals present ingredient A diminishes the decrease in the charge-dissipation performance with the passage of time, and its effect is therefore retained over longer time periods.

The organohydrogenpolysiloxane (Ingredient B) is a crosslinker for ingredient A. The present compositions are cured by a platinum-catalyzed hydrosilylation reaction between the silicon-bonded hydrogen atoms of ingredient (B) and the alkenyl radicals in ingredient A utilizing the catalytic activity of ingredient (C).

Ingredient B must contain at least 3 silicon-bonded hydrogen atoms in each molecule. The molecular structure of this ingredient is not specifically restricted, and may be any of straight chain, straight chain containing branch points, cyclic, and so forth. The molecular weight of ingredient B is likewise not

specifically restricted, but viscosities at 25 degrees Centigrade of 1 to 50,000 centipoise are preferred for improving the compatibility with ingredient A.

The concentration of ingredient B is sufficient to provide a molar ratio of silicon-bonded hydrogen atoms present in this ingredient to alkenyl radicals present in the one or more organopolysiloxanes that constitute ingredient A of from 0.5 : 1 to 20 : 1.

It is difficult to obtain good curing properties when this molar ratio falls below 0.5 : 1. On the other hand, when this value exceeds 20 : 1, there is an undesirable tendency for the cured product to become too hard when heated. When the curable composition contains an additional organopolysiloxane with a large concentration of alkenyl radical for the purpose of strengthening the cured material or other reason, additional ingredient B should be present to ensure that the molar ratio of silicon-bonded hydrogen atoms to all of the alkenyl radicals present in the curable composition is within the limits of this invention.

Non-limiting examples of ingredient B are:
trimethylsiloxy-terminated methylhydrogenpolysiloxanes,
trimethylsiloxy-terminated dimethylpolysiloxane-methylhydrogenpolysiloxane copolymers,
dimethylhydrogensiloxy-terminated dimethylpolysiloxane-methylhydrogenpolysiloxane copolymers,
dimethylpolysiloxane-methylhydrogenpolysiloxane cyclic copolymers,
copolymers composed of the $(CH_3)_2HSiO_{1/2}$ unit and the $SiO_{4/2}$ unit, and
copolymers composed of the $(CH_3)_3SiO_{1/2}$ unit, the $(CH_3)_2HSi0_{1/2}$ unit, and the $SiO_{4/2}$ unit.

Ingredient C of the present compositions is a platinum containing catalyst for the hydrosilylation reaction between the silicon-bonded hydrogen atoms in ingredient B and the alkenyl radicals present in ingredient A.

Preferred catalysts include but are not limited to chloroplatinic acid, chloroplatinic acid dissolved in alcohol or ketone, chloroplatinic acid/olefin complex compounds, chloroplatinic acid/alkenylsiloxane complex compounds, chloroplatinic acid/diketone complex compounds, platinum black, and platinum supported on a carrier. The concentration of ingredient C should be equivalent to from 0.1 to 500 weight parts of platinum metal for each million weight parts (ppm) of the total quantity of ingredients A and B.

The crosslinking reaction will not proceed satisfactorily at a platinum concentration of less than 0.1 ppm. On the other hand, exceeding 1,000 ppm of platinum is uneconomical because expensive platinum will then be used unnecessarily. The concentration of ingredient (C) is preferably equivalent to from 1 to 100 ppm of platinum metal.

As long as the object of the present invention is not compromised, the present curable compositions can optionally contain additives which inhibit the curing reaction. Useful reaction inhibitors include but are not limited to acetylenic compounds, hydrazine compounds, triazoles, and phosphines in the amounts necessary for obtaining the desired curing rate.

The following optional ingredients can also be added as required: pigments, heat stabilizers, flame retardants, plasticizers, and organopolysiloxanes containing one alkenyl radical in each molecule for the purpose of lowering the modulus of the cured elastomer.

A reinforcing filler can optionally be included in the curable composition to adjust the fluidity or improve the mechanical strength of the molding, and these fillers are exemplified by precipitated silica, fumed silica, calcined silica, fumed titanium oxide, and so forth. Moreover, an extender filler may also be added, not so much for improving the strength as for cost reduction. These fillers are exemplified by but not limited to quartz powder, diatomaceous earth, asbestos, aluminosilicic acid, iron oxide, zinc oxide, and calcium carbonate. These fillers may be used in their original form, or the surface of the filler can be treated with an organosilicon compound such as hexamethyldisilazane, trimethylchlorosilane, and hydroxyl-terminated dimethylpolysiloxanes.

The present compositions can be prepared simply by blending to homogeneity ingredients A, B and C together with any additional additives.

Preferred curable compositions of this invention are described in the following non-limiting examples. In these examples all parts and percentages are by weight, and viscosities were measured at 25 degrees Centigrade.

The charge-dissipation performance of cured elastomers prepared from the compositions was measured using the following method.

Method for measuring charge dissipation

The curable organosiloxane composition was placed between the platens of a hydraulic press maintained at 170 degrees Centigrade and compression molded for 5 minutes to yield a 2 mm-thick sheet of silicone rubber. This cured sheet was placed at the bottom of an electrical discharge device and charged

for approximately 2 minutes at 2,000 volts. Charging was discontinued when the charge on the surface of the silicone rubber sheet reached 2,000 volts.

A measurement of the variation in the charge on the surface of the silicone rubber sheet as a function of time was then immediately begun using a surface potential meter manufactured by the Monroe Electronic Corporation (Model 244).

Reference Example 1

Synthesis of a Dichlorosilane With a Polyoxyethylene Group

76.6 Parts of toluene and 201.6 parts of a polyoxyalkylene compound represented by the formula

$CH_3O(CH_2CH_2O)_nCH_2CH=CH_2$

where n has a value of 8 were placed in a 500 cc-capacity four-neck flask equipped with a reflux condenser, stirrer, and thermometer. After removal of the water by azeotropic distillation and cooling of the resultant mixture to 30 degrees Centigrade, a tetrahydrofuran solution of chloroplatinic acid was added in a quantity which provided a chloroplatinic acid concentration of 0.005% in the final reaction mixture. Methyldichlorosilane was then gradually added from an addition funnel. This addition was accompanied by a gradual increase in the temperature of the reaction mixture due to the heat generated by the addition reaction. Following completion of the addition, the reaction mixture was heated for 1 hour at 70 degrees Centigrade.

When the resultant reaction mixture was analyzed using proton nuclear magnetic resonance (NMR) the chemical shift originating from the allyloxy group was not observed, which confirmed completion of this addition reaction.

After completion of the addition reaction, the unreacted methyldichlorosilane and low boiling liquids such as toluene were distilled off under reduced pressure to yield 246.0 parts of a dichlorosilane having side-chain polyoxyethylene groups. This silane was found to contain 11.4 percent chlorine, less than the theoretical chlorine content of 13.1 percent.

It is believed that this difference in chlorine content is due to the presence in the starting material of impurities such as unreactive cyclic polyethylene oxide and other materials.

Reference Example 2

Synthesis of a Dimethylpolysiloxane With Pendant Polyoxyethylene Groups

900 Parts of a silanol-terminated dimethylpolysiloxane exhibiting a molecular weight of 3,000 and 300 parts toluene were introduced into a 5 liter-capacity four-neck flask equipped with a reflux condenser, stirrer, and thermometer. After the azeotropic removal of water from the reaction mixture system as described in Reference Example 1 and cooling to 70 degrees Centigrade, 51.3 parts anhydrous triethylamine were added to the reactor. 156.3 Parts of the dichlorosilane prepared in Reference Example 1 were then added through the addition funnel over a 2 to 3 hour period. The reaction mixture was maintained at a temperature of 70° C.for 4 hours following completion of the dichlorosilane addition.

At this time an additional 31.4 parts of anhydrous triethylamine were added to the reactor, followed by the addition of 25.0 parts dimethylvinylchlorosilane through the addition funnel over 1 hour. Following completion of the dimethylvinylchlorosilane addition, the reaction was allowed to continue for 6 hours at the same temperature, at which time the amine salt was removed by filtration, and the toluene in the filtrate was distilled off under reduced pressure.

The final reaction product, a dimethylpolysiloxane containing pendant polyoxyethylene groups, was a thick, semitransparent, light yellow liquid. To improve the purity of this product, low-molecular-weight substances were removed by adding 4 liters of methanol, stirring the resultant mixture for 10 minutes, finally allowing the resultant solution to remain under ambient conditions. The polyorganosiloxane layer and methanol layer were separated and the methanol layer was discarded. Another 4 liters of methanol were added, and the process was repeated. The methanol which had dissolved in dissolved in the polysiloxane was then distilled off under reduced pressure to yield 790 parts of a dimethylpolysiloxane containing the polyoxyethylene group as a side chain (ingredient A of the present curable compositions.

The final dimethylpolysiloxane containing pendant polyoxyethylene groups was a transparent liquid with a viscosity of 2,280 centipoise. Its weight average molecular weight, measured using gel permeation chromatography (GPC), was 43,000, and the silicon-bonded vinyl radical content was 0.11 weight%. The

concentration of polyoxyethylene units, measured using proton-NMR, was 8.0 percent. The calculated content of polyoxyethylene units based on initial reactant, was 9.4 weight%. This difference was due to unreacted cyclic polyethers and other impurities as noted in Reference Example 1. These impurities were removed by methanol extraction during the purification process.
This methanol extraction also simultaneously removed impurities, such as amine, as well as other impurities that would inhibit the subsequent curing reaction.

Example 1

15 Parts reinforcing dry-method silica (Aerosil R-972 from Nippon Aerosil Kabushiki Kaisha) was compounded and mixed to homogeneity into 100 parts of the dimethylpolysiloxane carrying side-chain polyoxyalkylene groups (viscosity = 2,280 centipoise) which had been prepared in Reference Example 2. The following were then mixed to homogeneity into this to afford a silicone rubber composition: chloroplatinic acid sufficient to give 20 ppm as platinum metal, 7 parts 3-methylbutynol, and 2.2 parts trimethylsiloxy-terminated dimethylsiloxane-methylhydrogensiloxane copolymer exhibiting the formula

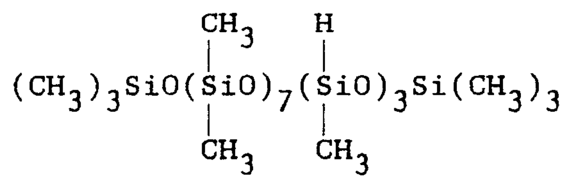

The resultant curable organosiloxane composition of this invention was press vulcanized for 5 minutes at a temperature of 150 degrees Centigrade to yield a 1 mm-thick sheet of cured silicone rubber. The physical and electrical properties of the sheet were measured, and these results are reported in Table 1. When the sheet was coated with an alkyd paint, a coherent film of paint was deposited on the surface of the cured sheet. After the paint had been cured by standing for 1 week, the adhesion between the paint film and silicone rubber was rated as satisfactory.

Comparison Example 1

For comparison, a silicone rubber composition was prepared using the procedure and reactants of Example 1, with the exception that a dimethylvinylsiloxy-terminated dimethylpolysiloxane containing 0.12 weight percent of silicon-bonded vinyl group radicals was used in place of the dimethylpolysiloxane with pendant polyoxyethylene described in Example 1. This comparison composition was cured as described in Example 1 to yield a 1 mm-thick silicone rubber sheet. The physical and electrical properties of the resultant cured silicone rubber were measured as described in Example 1 and these results are also reported in Table 1. When alkyd paint was coated on this silicone rubber using the procedure of Example 1, crawling of the paint was observed, and a uniform film could not be applied. When the adhesion between the paint film and silicone rubber was examined, bonding was found to be absent and peeling occurred in short order.

Table 1

| Property Measured | Example 1 | Example<br>Comparative Example 1 |
|---|---|---|
| hardness (JIS A Scale) | 25 | 30 |
| tensile strength ($kgf/cm^2$) | 30 | 55 |
| elongation (%) | 200 | 350 |
| tear strength ($kgf/cm^2$) | 7 | 14 |
| volume resistivity (ohm-cm) | $4 \times 10^{11}$ | $3 \times 10^{15}$ |
| contact angle (degrees) | 50 | 94 |

**Claims**

1. In a silicone rubber composition comprising
   (A) at least one organopolysiloxane having at least 2 silicon-bonded alkenyl radicals in each molecule,
   (B) an amount of an organohydrogenpolysiloxane containing at least 3 silicon-bonded hydrogen atoms in each molecule sufficient to provides a molar ratio of silicon bonded hydrogen atoms to alkenyl radicals in said composition of from 0.5 : 1 to 20 : 1, and
   (C) an amount of a platinum-containing catalyst sufficient to promote curing of said composition,

   the improvement the presence as said organopolysiloxane of at least one organopolysiloxanes containing at least two silicon-bonded alkenyl radicals and at least 0.2 weight percent of pendant silicon-bonded polyoxyalkylene groups per molecule, where said polyoxyalkylene groups are represented by the formula $R^1(OR^2)_nOR^3$-, where $R^1$ is an alkyl radical, $R^2$ and $R^3$ are alkylene radicals, the value of n is from 2 to 52, inclusive and where substantially all of the remaining silicon-bonded organic groups are hydrocarbon radicals or halogenated hydrocarbon radicals.

2. A composition according to claim 1 where said composition is packaged in at least two parts, with said organohydrogenpolysiloxane and said catalyst located in different parts of said composition.